# EUROPEAN PATENT APPLICATION

(11) **EP 2 157 698 A1**
(43) Date of publication of application: **24.02.2010**
(21) Application number: 08290777.5
(22) Date of filing: 18.08.2008
(51) Int. Cl.: H03L 7/18

(54) **Wideband synthesizer and method thereof**

(71) Applicant: Alcatel Lucent, 75008 Paris (FR)
(72) Inventor: Schlesinger, Heinz, 74395 Mundelsheim (DE)
(74) Representative: Richardt, Markus Albert

(57) **Abstract**

The present invention provides a wideband synthesizer device, comprising: a frequency generator; a first frequency divisor coupled to the frequency generator; a first switch coupled to the frequency generator; a second switch coupled to the first frequency divisor; a first and a second filter; a third and a fourth switch coupled to the first and second filter; an output port coupled to the first, second, third and fourth switch; a frequency controller coupled to the first frequency divisor and to the first, second, third and fourth switch. The frequency controller is adapted for sending control signal for controlling switching positions of at least one of the first and second switch, wherein the first frequency divisor is adapted for dividing a fundamental frequency signal of the frequency generator. The frequency controller is adapted for sending control signals for controlling switching position of at least one of the third and fourth switch, wherein the first and second filter are adapted for suppressing harmonics of the fundamental frequency signal of the frequency generator.

## Description

### Field of the invention

The invention relates to a wideband synthesizer device, to a method of suppressing unwanted harmonics in the LO- signal of a wideband synthesizer device and to a computer program product.

### Background and related art

A frequency synthesizer is an electronic device that generates frequencies derived from a time base or oscillator. Until recently, radio transceivers therefore exhibited a relatively narrow bandwidth.

### Summary of the invention

The present invention provides a wideband synthesizer device, comprising: a frequency generator; a first frequency divisor coupled to the frequency generator; a first switch coupled to the frequency generator; a second switch coupled to the first frequency divisor; a first and a second filter; a third and a forth switch coupled to the first and second filter; an output port coupled to the first, second, third and forth switch; a frequency controller coupled to the first frequency divisor and to the first, second, third and forth switch.

The frequency controller is adapted for sending control signal for controlling switching positions of at least one of the first and second switch, wherein the first frequency divisor is adapted for dividing a fundamental frequency signal of the frequency generator. The frequency controller is adapted for sending control signals for controlling switching position of at least one of the third and forth switch, wherein the first and second filter are adapted for suppressing harmonics of the fundamental frequency signal of the frequency generator. The invention thus enables to provide a radio transceiver with a wide bandwidth.

Embodiments of the invention are particularly advantageous to suppress unwanted carrier harmonics and channel images that are present in the radio frequency spectrum, cause by the DC signal part in the baseband signal, and by the existence of gain and phase imbalances in the I/Q branches of the modulator. The suppression of unwanted carrier and harmonics allows using of compensation signal of gain, phase and DC offset, that further allow obtaining a perfectly matched end carrier suppression.

In accordance with an embodiment of the invention, the frequency generator is adapted for generating the fundamental frequency signal.

In accordance with an embodiment of the invention, the wideband synthesizer further comprising: a second frequency divisor coupled to the frequency generator and to the frequency controller; a fifth switch coupled to the output port and to the second frequency divisor; a third filter; a sixth switch coupled to the third filter.

In accordance with an embodiment of the invention, the first filter suppresses a first harmonic of a first frequency signal; wherein the second filter suppresses a second harmonic of the first frequency signal, wherein the first frequency signal is the fundamental frequency signal divided by the first frequency divisor.

In accordance with an embodiment of the invention, the third filter suppresses a third harmonic of a second frequency, wherein the second frequency is the fundamental frequency signal divided by the second frequency divisor.

In accordance with an embodiment of the invention, the first frequency divisor divides the fundamental frequency by two, wherein the second frequency divisor divides the fundamental frequency by four.

In another aspect, the invention relates to a method of suppressing harmonics of a LO- signal in a wideband synthesizer, the wideband synthesizer comprising a frequency generator, a first frequency divisor coupled to the frequency generator, a first switch coupled to the frequency generator, a second switch coupled to the first frequency divisor, a first filter, a third switch coupled to the first filter; an output port coupled to the first, second and third switch; a frequency controller coupled to the first frequency divisor and to the first, second and third switch.

The method comprises: switching on the second switch and the third switch by the frequency controller; activating the first frequency divisor; generating a fundamental frequency signal by the frequency generator; generating a first frequency signal by dividing the fundamental frequency signal by the first frequency divisor; obtaining a first filtered signal by suppressing at least a first harmonic of the first frequency signal by the first filter; outputting the first filtered signal in the output port.

In accordance with an embodiment of the invention, the method further comprises: switching on the first switch; obtaining a second filtered signal by suppressing at last a second harmonic of the fundamental frequency signal by the second filter; outputting the second filtered signal in the output port.

In accordance with an embodiment of the invention, the wideband synthesizer further comprises a forth switch coupled to the frequency controller and to the output port, a second filter coupled to the forth switch.

In accordance with an embodiment of the invention, the method further comprises: switching on the forth switch; obtaining a second filtered signal by suppressing at least a third harmonic of the first frequency signal by the second filter; outputting the third filtered signal in the output port.

In accordance with an embodiment of the invention, the wideband synthesizer further comprises a second frequency divisor coupled to the frequency generator and to the frequency controller; a fifth switch coupled to the output port and to the second frequency divisor; a third filter; a sixth switch coupled to the third filter. The method further comprises: generating a second frequency signal by dividing the fundamental frequency signal by the second frequency divisor; suppressing at least a forth harmonic of the second frequency signal by the third filter; outputting the third filtered signal in the output port.

In accordance with an embodiment of the invention, the wideband synthesizer is used in radio-frequency systems.

In accordance with an embodiment of the invention, the filters are notch filters or chebychef filters, or any filter adapted for suppressing harmonics.

In another aspect, the invention relates to a computer program product stored on a storage medium, comprising executable program means for causing a wideband synthesizer to perform a method according to any of the preceding embodiments when the program is run on a frequency controller.

### Brief description of the drawings

In the following preferred embodiments of the invention will be described in greater detail by way of example only making reference to the drawings in which:
- Figure 1: shows an example of an output spectrum of a wideband synthesizer according to the prior art,
- Figure 2: is a first flow diagram illustrating a first embodiment of a wideband synthesizer,
- Figure 3: is a block diagram illustrating a second embodiment of a wideband synthesizer,
- Figure 4: is a block diagram of a further embodiment of a wireless synthesizer device,
- Figure 5: is a flow diagram illustrating an embodiment of the method of the invention.

### Detailed description

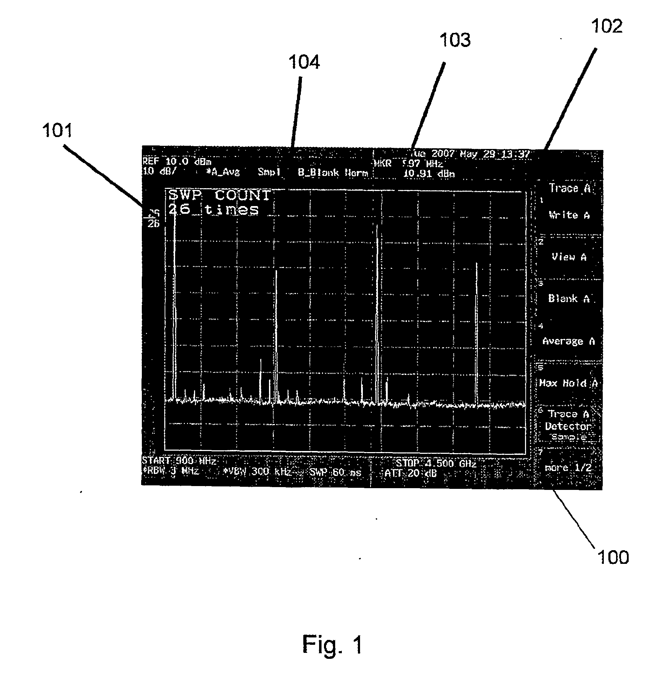

Fig. 1 shows a graphic 100 of an output spectrum of a wideband synthesizer according to the prior art, with fundamental frequency divided by 4. The wanted signal 101 is represented at 1 GHz, which means the fundamental frequency at 4 GHz divided by 4. The unwanted fundamental frequency 102 at 4 GHz, the third harmonic 103 at 3 GHz as well as the frequency divided by 2 104 representing unwanted second harmonic are also existing in the spectrum together with the wanted signal. The level of this unwanted signal or harmonics may be as strong as 10 dB below the wanted signal.

The existing harmonics or unwanted frequency signals generated by wideband synthesizer of the prior art, hinders the use of carrier and image suppression by adding gain, phase and DC offsets in digital baseband domain, due to internal electrical effects within the modulator of the wideband base station transceiver.

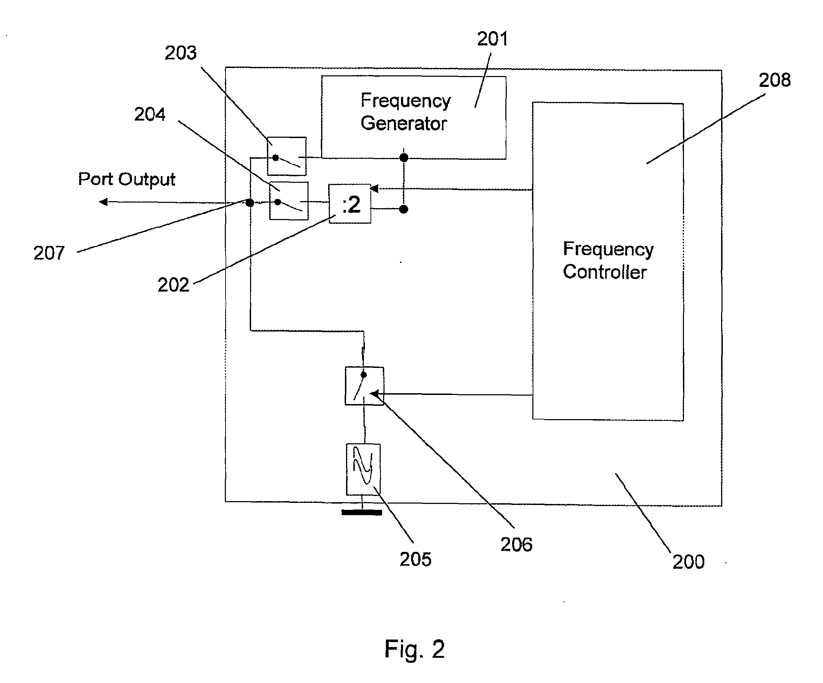

Fig. 2 shows a block diagram 200 of a wideband synthesizer that comprises frequency generator 201, a first frequency divisor 202 coupled to the frequency generator, a first switch 203 coupled directly to the frequency generator, the second switch 204 coupled to the first frequency divisor, a first filter 205, a third switch 206 coupled to the first filter 205, an output port 207 coupled to the first, second and third switch. The wideband synthesizer 200 further comprises a frequency controller 208 coupled to the first frequency divisor and to the first, second and third switch.

Wideband base station transceivers may require to generate a radio frequency range of 700 MHz to 4,400 MHz. This range is obtained by dividing the total frequency range in sub-bands. A fundamental frequency range generated by a frequency generator 201 of the wideband synthesizer is divided by frequency divisors of the first frequency divisor 202 to obtain the frequency band of interest. If for example, the frequency generator generates a fundamental frequency range between the 3,800 MHz to the 4,400 MHz, a first frequency divisor may divide the fundamental frequency range by 2, obtaining the range between 1,900 MHz to 2,200 MHz. A second frequency divisor may divide the fundamental frequency range by 4, obtaining a new frequency range between 950 MHz to 1,100 MHz.

By using several fundamental wave generation synthesizers or dividing factors combined with an appropriate fundamental frequency overlap, the total frequency range coverage can be achieved by sub-bands. With the described generated high radio frequency using the wideband synthesizer, a base band-signal (IF = 0 Hz) or low interstage frequency baseband signal (up to 100 MHz) may be converted to the radio frequency range, that may be in the GHz range, by an I/Q modulator or a simple real mixer cell. In order to obtain a good bit error rate and to keep the spectral radio frequency purity of the system, an appropriate carrier image suppression is necessary. However, unwanted carrier harmonics and channel images are present in the radio frequency spectrum, caused by the DC signal part in the baseband signal, and by the existence of gain and phase imbalances in the I/Q branches of the modulator.

As it was described under fig. 1, the output spectrum of a real wideband synthesizer shows unwanted harmonic frequencies, that obstructs the use of compensation signal of gain, phase and DC offset, that allow obtaining a perfectly matched end carrier suppression. The wideband synthesizer in fig. 2 allows suppressing the harmonics of the generated radio signal of the wideband synthesizer. The frequency controller 208 is adapted for sending a control signal to the second and the third switch in order to activate the first frequency divisor. The frequency generator 201 is adapted for generating a fundamental frequency signal. Further, the first frequency divisor 202 is adapted for generating a first frequency signal by dividing the fundamental frequency signal by an event or odd amount. The first filter is adapted for obtaining a first filter signal by suppressing at least a first harmonic of the first frequency signal and outputting the first filter signal in the output port.

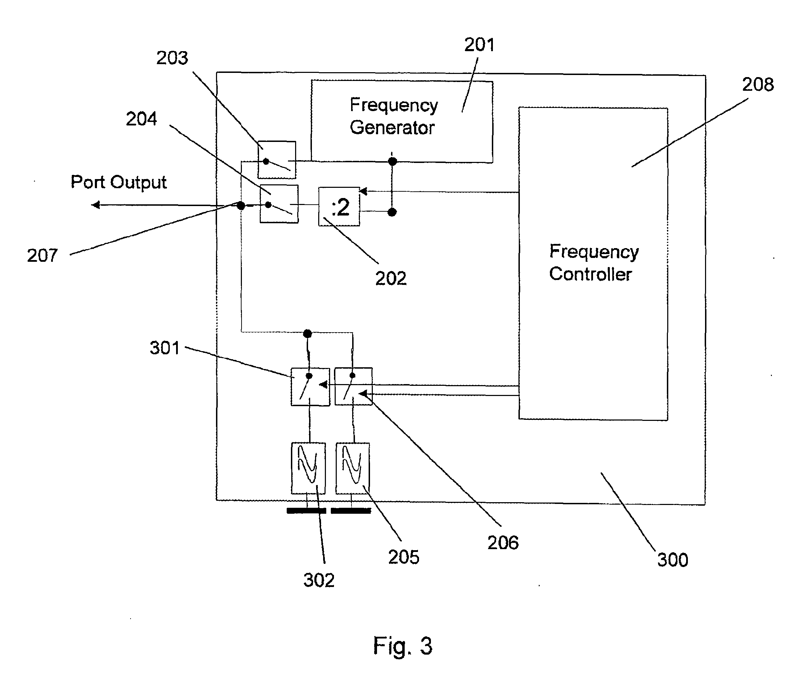

Fig. 3 shows a second block diagram 300 of a wideband synthesizer. The elements in the embodiment shown in fig. 3 that correspond to elements of the embodiment of fig. 2 have been designated by the same reference signals. The wideband synthesizer 300 further comprises a fourth switch 301 coupled to the frequency controller 208 and to the output port 207, and a second filter 302 coupled to the fourth switch 301.

The frequency controller 208 is adapted for sending a control signal for switching on the second switch 204 and the fourth switch 301. The frequency generator 201 is adapted for generating a fundamental frequency signal and the first frequency divisor is adapted for dividing the fundamental frequency signal and generating a first frequency signal. The second filter 302 is adapted for obtaining a second filter signal by suppressing at least a third harmonic of the first frequency signal and outputting the third filter signal in the output port 207.

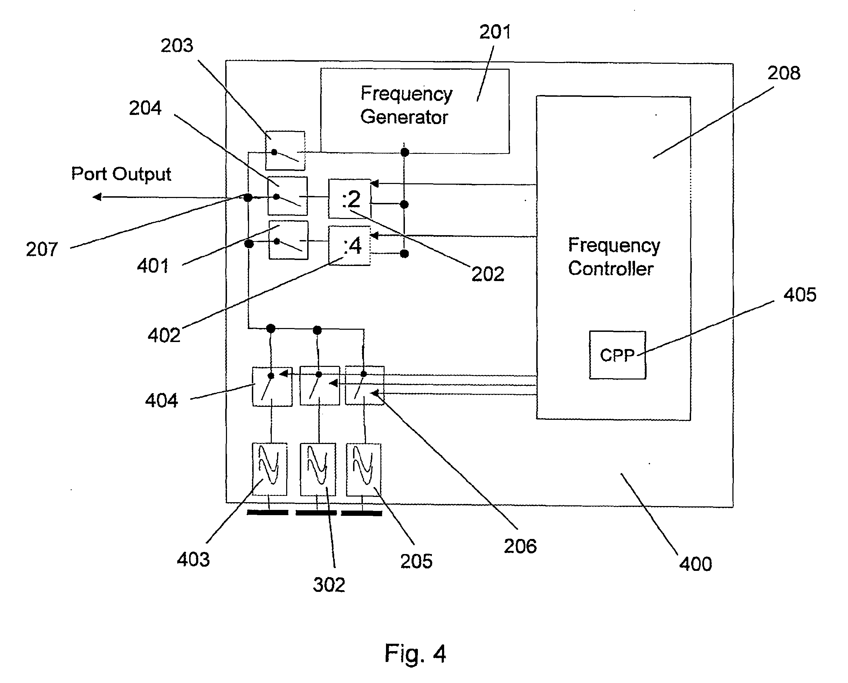

Fig. 4 shows a block diagram 400 of a wideband synthesizer. The elements in the embodiment shown in fig. 4 that correspond to elements of the embodiment of fig. 3 have been designated by the same reference signals. The wideband synthesizer 400 further comprises a second frequency divisor 402 coupled to the frequency generator 201 and to the frequency controller 208; a fifth switch 401 is coupled to the output port and to the second frequency divisor 402; a third filter 403, a sixth switch 404 coupled to the third filter 403.

The frequency generator 201 is adapted for generating a fundamental frequency signal. The second frequency divisor 402 is adapted for generating a second frequency signal by dividing the fundamental frequency signal, where the second frequency signal generated by the second frequency divisor is a frequency with a lower range than the one generated by the first frequency divisor 202. The third filter 403 is adapted for suppressing a fourth harmonic of the second frequency signal and outputting the third filter signal in the output port. If for example the second frequency divisor divides the fundamental frequency by 4 and the fundamental frequency corresponds to 4 GHz, the third filter may filter the harmonic found in the 2 GHz range. Further, the second filter may suppress the harmonic found in the 3 GHz frequency and the first filter 205 may suppress the harmonic of the frequency of 4 GHz.

The filters of any of the figures or embodiments may be notch filters, or chebychef filters or any filter adapted for suppressing harmonics. The frequency controller 208 may further comprise a computer program product 405 for running executable program means for causing a wideband synthesizer to perform a method of any of the embodiments.

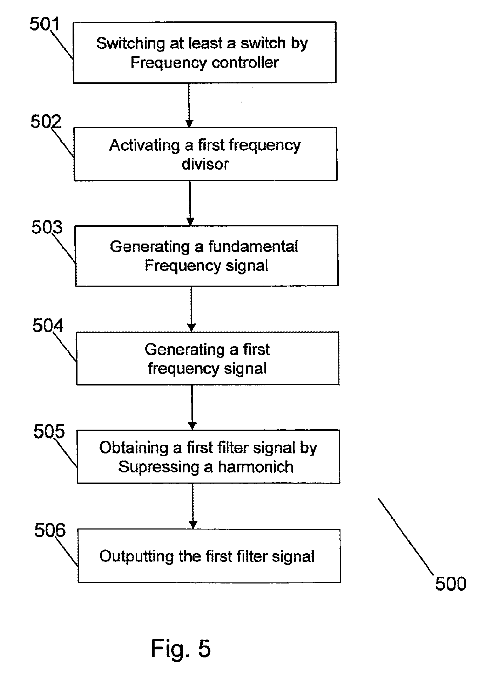

Fig. 5 shows a flow diagram of a method of suppressing harmonics of a radio signal in a wideband synthesizer comprising switching a second switch and a third switch by a frequency controller in a first step 501, activating a first frequency divisor in a second step 502; generating a fundamental frequency signal by a frequency generator in a third step 503; generating a first frequency signal by dividing the fundamental frequency signal by the first frequency divisor in a fourth step 504; obtaining a first filter signal by suppressing at least a first harmonic of the first frequency signal by a first filter in a fifth step 505 and outputting the first filter signal in the output port in the step 506.

### List of reference numerals

| | |
|---|---|
| 100 | Output spectrum |
| 101 | Wanted frequency signal |
| 102 | First unwanted frequency signal |
| 103 | Second harmonic |
| 104 | Third harmonic |
| 200 | Block diagram |
| 201 | Frequency generator |
| 202 | First Frequency Divisor |
| 203 | First switch |
| 204 | Second switch |
| 205 | First filter |
| 206 | Third switch |
| 207 | Output port |
| 208 | Frequency controller |
| 300 | Block diagram |
| 301 | Fourth switch |
| 302 | Second filter |
| 400 | Block diagram |
| 401 | Fifth switch |
| 402 | Second Frequency Divisor |
| 403 | Third filter |
| 404 | Sixth switch |
| 406 | Computer Program Product |
| 500 | flow diagram |
| 501 | First step |
| 502 | Second step |
| 503 | Third step |
| 504 | Fourth step |
| 505 | Fifth step |
| 506 | Sixth step |

## Claims

1. A wideband synthesizer device, comprising:
- a frequency generator (201);
- a first frequency divisor (202) coupled to the frequency generator (201);
- a first switch (203) coupled to the frequency generator (201);
- a second switch (204) coupled to the first frequency divisor (202);
- a first (205) and a second filter (302);
- a third (206) and a forth switch (301) coupled to the first (205) and the second filter (302);
- an output port (207) coupled to the first (203), second (204), third (206) and forth switch (301);
- a frequency controller (208) coupled to the first frequency divisor (202) and to the first (203), second (204), third (206) and forth switch (301);
wherein the frequency controller (208) is adapted for sending control signal for controlling switching positions of at least one of the first (203) and the second switch (204), wherein the first frequency divisor (202) is adapted for dividing a fundamental frequency signal of the frequency generator (201);
wherein the frequency controller (208) is adapted for sending control signals for controlling switching position of at least one of the third (206) and forth switch (301),
wherein the first (205) and the second filter (302) are adapted for suppressing harmonics of the fundamental frequency signal of the frequency generator (201).

2. The wideband synthesizer of claim 1, wherein the fundamental frequency signal is formed of a fundamental frequency range generated by at least two oscillators.

3. The wideband synthesizer of claim 1 or claim 2 further comprising:
- a second frequency divisor (402) coupled to the frequency generator (201) and to the frequency controller (208);
- a fifth switch (401) coupled to the output port (207) and to the second frequency divisor (402);
- a third filter (403);
- a sixth switch (404) coupled to the third filter (403).

4. The wideband synthesizer of any of the preceding claims,
wherein the first filter (205) suppresses a first harmonic of a first frequency signal;
wherein the second filter (302) suppresses a second harmonic of the first frequency signal, wherein the first frequency signal is the fundamental frequency signal divided by the first frequency divisor (202).

5. The wideband synthesizer of the claims 3 and 4, wherein the third filter (403) suppresses a third harmonic of a second frequency signal, wherein the second frequency signal is the fundamental frequency signal divided by the second frequency divisor (402).

6. The wideband synthesizer of any of the claims 3 to 5, wherein the first frequency divisor (202) divides the fundamental frequency by two, wherein the second frequency divisor (402) divides the fundamental frequency by four.

7. The wideband synthesizer of any of the preceding claims, wherein the filters (205,302,403) are notch filters or chebychef filters.

8. A method of suppressing harmonics of a radio signal in a wideband synthesizer, the wideband synthesizer comprising a frequency generator (201), a first frequency divisor (202) coupled to the frequency generator (201), a first switch (203) coupled to the frequency generator (201), a second switch (204) coupled to the first frequency divisor (202), a first filter (205), a third switch (206) coupled to the first filter (205); an output port (207) coupled to the first (203), second (204) and third switch (206); a frequency controller (208) coupled to the first frequency divisor (202) and to the first (203), second (204) and third switch (206); the method comprising:
- switching on the second switch (204) and the third switch (206) by the frequency controller (208);
- activating the first frequency divisor (202);
- generating a fundamental frequency signal by the frequency generator (203);
- generating a first frequency signal by dividing the fundamental frequency signal by the first frequency divisor (202);
- obtaining a first filtered signal by suppressing at least a first harmonic of the first frequency signal by the first filter (205);
- outputting the first filtered signal in the output port (207).

9. The method of the claim 7 further comprising:
- switching on the first switch (203);
- obtaining a second filtered signal by suppressing at last a second harmonic of the fundamental frequency signal by the second filter (302);
- outputting the second filtered signal in the output port (207).

10. The method of any of the claim 7 to 9, wherein the wideband synthesizer further comprises a forth switch (301) coupled to the frequency controller and to the output port (207), a second filter (302) coupled to the forth switch (301).

11. The method of claim 10 further comprising:
- switching on the forth switch (301);
- obtaining a second filtered signal by suppressing at least a third harmonic of the first frequency signal by the second filter (302);
- outputting the third filtered signal in the output port.

12. The method of claim 10, wherein the wideband synthesizer further comprises a second frequency divisor (402) coupled to the frequency generator (201) and to the frequency controller (208); a fifth switch (401) coupled to the output port (207) and to the second frequency divisor (402); a third filter (403); a sixth switch (404) coupled to the third filter (403), wherein the method further comprising:
- generating a second frequency signal by dividing the fundamental frequency signal by the second frequency divisor (402);
- suppressing at least a forth harmonic of the second frequency signal by the third filter (403);
- outputting the third filtered signal in the output port (207).

13. The method of any of the claims 8 to 13, wherein the wideband synthesizer is used in radio-frequency systems.

14. The method of any of the claims 8 to 13, wherein the filters are notch filters or chebychef filters.

15. A computer program product stored on a storage medium, comprising executable program means for causing a wideband synthesizer to perform a method according to any of the preceding claims 8 to 14 when the program is run on a frequency controller.

## Amended claims

### Amended claims in accordance with Rule 137(2) EPC.

1. A wideband synthesizer device, comprising:
- a frequency generator (201);
- a first frequency divisor (202) coupled to the frequency generator (201);
- a first switch (203) coupled to the frequency generator (201);
- a second switch (204) coupled to the first frequency divisor (202);
- a first (205) and a second filter (302) connected to the grounding;
- a third (206) and a fourth switch (301) respectively coupled to the first (205) and the second filter (302);
- an output port (207) coupled to the first (203), second (204), third (206) and fourth switch (301);
- a frequency controller (208) coupled to the first frequency divisor (202) and to the first (203), second (204), third (206) and fourth switch (301);
wherein the frequency controller (208) sends control signals for controlling switching positions of at least one of the first (203) and the second switch (204), wherein the first frequency divisor (202) is adapted for dividing a fundamental frequency signal of the frequency generator (201);
wherein the frequency controller (208) is adapted for sending control signals for controlling switching position of at least one of the third (206) and fourth switch (301), wherein the first (205) and the second filter (302) are adapted for suppressing harmonics of the fundamental frequency signal of the frequency generator (201).

2. The wideband synthesizer of claim 1 further comprising:
- a second frequency divisor (402) coupled to the frequency generator (201) and to the frequency controller (208);
- a fifth switch (401) coupled to the output port (207) and to the second frequency divisor (402);
- a third filter (403) connected to the grounding;
- a sixth switch (404) coupled to the third filter (403).

3. The wideband synthesizer of any of the preceding claims,
wherein the first filter (205) suppresses a first harmonic of a first frequency signal;
wherein the second filter (302) suppresses a second harmonic of the first frequency signal, wherein the first frequency signal is the fundamental frequency signal divided by the first frequency divisor (202).

4. The wideband synthesizer of the claims 2 and 3, wherein the third filter (403) suppresses a third harmonic of a second frequency signal, wherein the second frequency signal is the fundamental frequency signal divided by the second frequency divisor (402).

5. The wideband synthesizer of any of the claims 3 and 4, wherein the first frequency divisor (202) divides the fundamental frequency by two, wherein the second frequency divisor (402) divides the fundamental frequency by four.

6. The wideband synthesizer of any of the preceding claims, wherein the filters (205,302,403) are notch filters or chebychef filters.

7. A method of suppressing harmonics of a radio signal in a wideband synthesizer, the wideband synthesizer comprising a frequency generator (201), a first frequency divisor (202) coupled to the frequency generator (201), a first switch (203) coupled to the frequency generator (201), a second switch (204) coupled to the first frequency divisor (202), a first filter (205) connected to the grounding, a second filter (302) connected to the grounding, a third switch (206) coupled to the first filter (205), a fourth switch (301) coupled to the second filter (302); an output port (207) coupled to the first (203), second (204), third (206) and fourth switch (301); a frequency controller (208) coupled to the first frequency divisor (202) and to the first (203), second (204) and third switch (206); the method comprising:
- switching on the second switch (204) and the third switch (206) by the frequency controller (208);
- activating the first frequency divisor (202);
- generating a fundamental frequency signal by the frequency generator (201);
- generating a first frequency signal by dividing the fundamental frequency signal by the first frequency divisor (202);
- obtaining a first filtered signal by suppressing harmonics of the first frequency signal by the first (205) and the second filter (302);
- outputting the first filtered signal in the output port (207).

8. The method of the claim 7 further comprising:
- switching on the first switch (203);
- obtaining a second filtered signal by suppressing at least a second harmonic of the fundamental frequency signal by the second filter (302);
- outputting the second filtered signal in the output port (207).

9. The method of any of the claim 7 and 8, wherein the wideband synthesizer further comprises a fourth switch (301) coupled to the frequency controller and to the output port (207), a second filter (302) coupled to the fourth switch (301).

10. The method of claim 9 further comprising:
- switching on the fourth switch (301);
- obtaining a third filtered signal by suppressing at least a third harmonic of the first frequency signal by the second filter (302);
- outputting the third filtered signal in the output port.

11. The method of claim 9, wherein the wideband synthesizer further comprises a second frequency divisor (402) coupled to the frequency generator (201) and to the frequency controller (208); a fifth switch (401) coupled to the output port (207) and to the second frequency divisor (402); a third filter (403); a sixth switch (404) coupled to the third filter (403), wherein the method further comprising:
- generating a second frequency signal by dividing the fundamental frequency signal by the second frequency divisor (402);
- suppressing at least a fourth harmonic of the second frequency signal by the third filter (403);
- outputting the third filtered signal in the output port (207).

12. The method of any of the claims 7 to 11, wherein the wideband synthesizer is used in radio-frequency systems.

13. The method of any of the claims 7 to 12, wherein the filters are notch filters or chebychef filters.

14. A computer program product stored on a storage medium, comprising executable program means for causing a wideband synthesizer to perform a method according to any of the preceding claims 7 to 13 when the program is run on a frequency controller.
